# EUROPÄISCHE PATENTANMELDUNG

(11) **EP 2 224 304 A1**
(43) Veröffentlichungstag der Anmeldung: **01.09.2010**
(21) Anmeldenummer: 09002887.9
(22) Anmeldetag: 27.02.2009
(51) Int. Cl.: G05B 23/02

(54) **Verfahren zum Führen und Beobachten eines Prozesses**

(71) Anmelder: Siemens Aktiengesellschaft, 80333 München (DE)
(72) Erfinder: Milvich, Michael, 68753 Waghäusel (DE)

(57) **Zusammenfassung**

Die Erfindung betrifft ein Verfahren zum Führen und Beobachten eines Prozesses mittels eines Bedien- und Beobachtungssystems (2), wobei Automatisierungskomponenten (2 ... 12) dem Bedien- und Beobachtungssystem (2) Prozessinformationen (M1, M2, ... Mn) zur Darstellung auf einer Anzeigeeinheit des Bedien- und Beobachtungssystems (2) übermitteln. Es werden Maßnahmen vorgeschlagen, welche eine einfache Verknüpfung und Handhabung von Prozessinformationen (M1, M2, ... Mn) insbesondere für einen unerfahrenen Anwender ermöglichen.

## Beschreibung

Die Erfindung betrifft ein Verfahren zum Führen und Beobachten eines Prozesses mittels eines Bedien- und Beobachtungssystems, wobei Automatisierungskomponenten dem Bedien- und Beobachtungssystem Prozessinformationen zur Darstellung auf einer Anzeigeeinheit des Bedien- und Beobachtungssystems übermitteln. Darüber hinaus betrifft die Erfindung ein Bedien- und Beobachtungssystem, welches zur Durchführung des Verfahrens geeignet ist.

Ein derartiges Verfahren sowie ein derartiges Bedien- und Beobachtungssystem ist aus dem Siemens-Katalog "ST PCS 7 - November 2007", SIMATIC PCS 7, Kapitel 5 bekannt. Ein Bedien- und Beobachtungssystem in Form eines so genannten Operator-Systems ermöglicht im Rahmen eines Prozessleitsystems die Führung eines zu steuernden technischen Prozesses, wobei ein Operator den Prozessverlauf über verschiedene Sichten beobachten und bei Bedarf steuernd eingreifen kann. In einem so genannten Meldefenster, welches auf einer Anzeigeeinheit des Bedien- und Beobachtungssystems darstellbar ist, werden dem Operator bzw. dem Anwender beispielsweise Meldezeilen für zuletzt eingegangene Meldungen angezeigt, wobei diese jeweils mit Datum, Uhrzeit sowie Art und Klasse der Meldung versehen sind. Eine einfache Verknüpfung und Handhabung von Meldungen insbesondere für einen unerfahrenen Anwender ist nicht vorgesehen.

Der vorliegenden Erfindung liegt die Aufgabe zugrunde, ein Verfahren der eingangs genannten Art zu verbessern. Darüber hinaus ist eine geeignete Anordnung zur Durchführung eines derartigen Verfahrens zu schaffen.

Im Hinblick auf das Verfahren wird diese Aufgabe durch die im kennzeichnenden Teil des Anspruchs 1 und im Hinblick auf das Bedien- und Beobachtungssystem durch die im kennzeichnenden Teil des Anspruchs 3 angegebenen Maßnahmen gelöst.

Vorteilhaft ist, dass ein Anwender einfach und direkt eine Kennung zu einer Prozessinformation bzw. zu einer Meldung vor Ort vergeben kann, wobei die Kennung in menschenlesbarer Form, z. B. mittels einer Tastatur, eingegeben wird. Ein Anwender ordnet z. B. einer Reihe von Alarmen oder Ereignissen, die in einer Kette aufgetreten sind und vermeintlich zusammenhängen bzw. in Wirkverbindung stehen, eine Kennung (einen "Tag") zu. Ein Experte kann zu einem späteren Zeitpunkt sehr einfach mittels eines Suchsystems die Alarmkette über diese Kennung auffinden und erkennen, ob die Alarme oder Ereignisse im Zusammenhang bzw. in Wirkverbindung zueinander stehen.
Ein Anwender kann zu verschiedenen Zeitpunkten mehrere Alarme wegen einer für ihn nicht verständlichen jedoch keine ernsthafte Gefahr darstellenden Störung in einem Heizkessel kennzeichnen. Beispielsweise für den Fall, dass der Anwender diesen Ereignissen oder Alarmen menschenlesbare Kennungen "Ereignisursache unklar" und "Kessel 7" zuordnet und in folgenden Tagen oder Monaten derartige Ereignisse oder Alarme wieder auftreten, denen er wiederum diese Kennungen bzw. Begriffe zuordnet, können im Rahmen einer Analyse diese Ereignisse oder Alarme über den gesamten Zeitraum sehr schnell wieder gefunden werden. Auch für den Fall, dass der Anwender nicht alle "wichtigen" Alarme mit einer entsprechenden Kennung versehen hat, liegen zumindest bessere Anhaltspunkte für eine Störungsanalyse vor.

Die Kennungen können auch dazu vorgesehen werden, um Ereignisse als verbesserungswürdig zu markieren. Z. B. kann es erforderlich sein, eine Projektierung zu verfeinern, um z. B. einen unbedeutenden Alarm X nicht sooft auszulösen. Ein Projektierer analysiert alle "Verbesserungs"-Markierungen mit dem Ziel, die eingesetzten Projektierungswerkzeuge zu verbessern.

Mittels des Suchsystems sind sehr schnell den Kennungen zugeordnete Informationen auffindbar, wobei auch ältere Informationen schnell wieder gefunden und mögliche Parallelen zwischen alten und neueren Informationen leichter in Verbindung gebracht werden können.

Die Erfindung ist insbesondere in einem Prozessleitsystem einsetzbar, in welchem gewöhnlich mehrere tausend Ereignisse bzw. Meldungen auf Bedien- und Beobachtungssystemen dargestellt werden.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: Bestandteile eines Prozessleitsystems und
- Figuren 2 und 3: auf einer Anzeigeeinheit dargestellte Meldefenster.

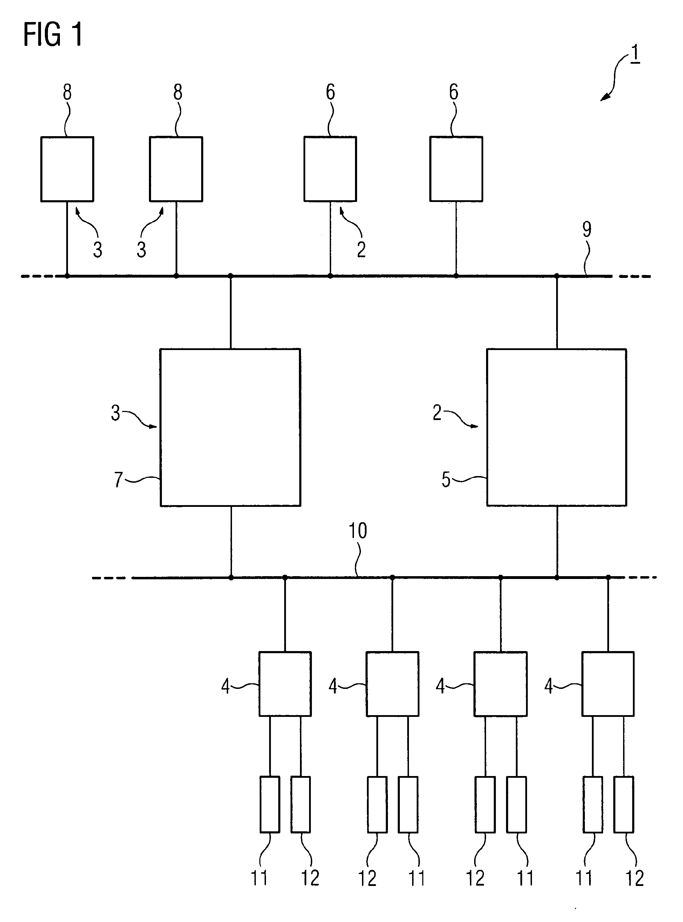

In Figur 1 sind mit 1 Bestandteile eines Prozessleitsystems bezeichnet, das mit einem Bedien- und Beobachtungssystem in Form eines Operator-Systems 2, mit einem Batch-System 3 und mit Automatisierungsgeräten 4 versehen ist. Selbstverständlich weist das Prozessleitsystem weitere hier nicht dargestellte Bestandteile bzw. weitere Automatisierungskomponenten auf, z. B. Automatisierungskomponenten in Form von dezentralen Peripheriegeräten und/oder Engineering-Systemen und/oder Maintenance-Stationen. Das Operator-System 2 ist zum Bedienen und Beobachten eines Prozessablaufs in einer Anlage vorgesehen und weist einen OS-Server 5 und mehrere OS-Clients 6 auf, wobei das Operator-System 2 und das Batch-System 3, welches einen Batch-Server 7 und mehrere Batch-Clients 8 umfasst, über geeignete Busverbindungen 9, 10 mit den OS-Clients 6, den Batch-Clients 8 und den Automatisierungsgeräten 4 zum Austausch von Informationen verbunden sind. Eine auf dem Batch-Server 7 oder auf mindestens einem der Automatisierungsgeräte 4, an welchen Sensoren 11 und/oder Aktoren 12 angeschlossen sind, ablauffähige Rezeptsteuerung steuert während eines Chargenprozesses mittels Ansteuersignalen die Aktoren 12 an und/oder liest Sensorsignale ein, welche z. B. Temperatur- oder Druckwerte repräsentieren. Dabei sind einerseits geeignete Bedienoberflächen zur Prozessführung auf mindestens einem der OS-Clients 6 und andererseits ein der Rezeptsteuerung zugrunde liegendes Rezept des Chargenprozesses auf mindestens einem der Batch-Clients 8 einem Operator visuell darstellbar.

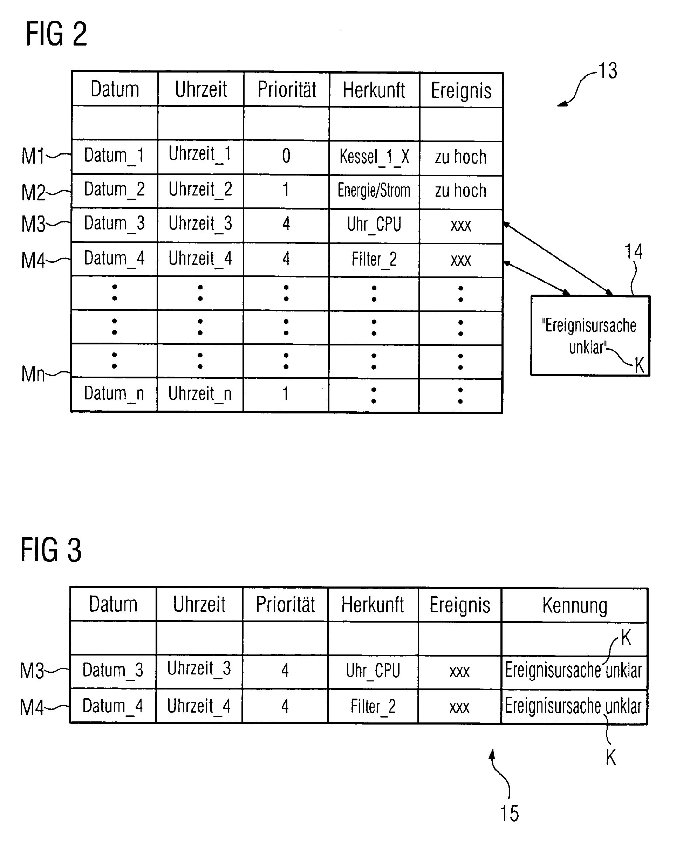

Im Folgenden wird auf Figur 2 und Figur 3 verwiesen, in welchen auf einer Anzeigeeinheit eines OS-Clients dargestellte Meldefenster 13, 14 zur Darstellung von Prozessinformationen gezeigt sind. Die in den Figuren 2 und 3 dargestellten gleichen Teile sind mit gleichen Bezugszeichen versehen.
In dem Meldefenster 13 werden einem Anwender mit Attributen versehene Meldungen M1, M2, M3, M4, ... Mn angezeigt, wobei im vorliegenden Ausführungsbeispiel die Meldungen die Attribute "Datum", "Uhrzeit", "Herkunft", "Priorität" sowie "Ereignis" umfassen. Selbstverständlich können weitere Attribute im Meldefenster angezeigt werden, um dem Anwender weitere für die Prozessführung geeignete Informationen bereitzustellen. Es wird angenommen, dass für den Anwender die mit einer niederen Priorität 4 versehenen Meldungen M3, M4 (Figur 2) nicht schlüssig sind. Diese niedere Priorität 4 weist den Anwender darauf hin, dass keine Gefahr für Menschen und Anlageteile besteht, so dass keine Maßnahmen im Hinblick auf eine Prozessführung erforderlich sind. Allerdings weist bzw. ordnet der Anwender diesen Meldungen M3, M4 jeweils eine Kennung K bzw. einen Begriff - z. B. den Begriff "Ereignisursache unklar" - zu, damit die Meldungen M3, M4 zu einem späteren Zeitpunkt analysiert werden können. Um die Meldungen M3, M4 kennzeichnen zu können bzw. diese mit der Kennung K zu versehen, ist der OS-Client oder der OS-Server, welcher mit diesem OS-Client in Wirkverbindung steht, mit einem geeigneten Software-Werkzeug versehen. Dieses Software-Werkzeug ermöglicht, dass aufgrund einer Eingabe durch den Anwender - beispielsweise aufgrund einer Tastatur- oder Mauseingabe - die Meldungen M3, M4 markiert werden und ferner sich auf der Anzeigeeinheit ein Eingabefeld 14 zur Eingabe der Kennung K in Form eines menschenlesbaren Begriffs "Ereignisursache unklar" öffnet. Nachdem die Eingabe beendet ist, ist die Vergabe der Kennung abgeschlossen und der Anwender kann bei Bedarf weitere Meldungen M1, M2, ... kennzeichnen.
Das Software-Werkzeug des OS-Clients und/oder des OS-Servers ist ferner mit einem Suchsystem versehen, mit dem für einen Anwender die einer Kennung zugeordneten Meldungen auffindbar und auf der Anzeigeeinheit des OS-Clients darstellbar sind (Figur 3).
Im vorliegenden Ausführungsbeispiel findet der Anwender nach einer Aktivierung des Suchsystems und Eingabe der Kennung "Ereignisursache unklar" als Suchbegriff die diesem Begriff zugeordneten Meldungen M3, M4, wobei ein Meldefenster 15 neben den Attributen "Datum", "Uhrzeit", "Priorität", "Herkunft" sowie "Ereignis" zusätzlich die Kennung "Ergebnisursache unklar" anzeigt. Die Aktivierung des Suchsystems kann ebenfalls aufgrund einer entsprechenden Tastatur- oder Mauseingabe erfolgen, aufgrund deren sich auf der Anzeigeeinheit des OS-Clients ein Suchfenster zur Eingabe eines Suchbegriffs öffnet.

## Patentansprüche

1. Verfahren zum Führen und Beobachten eines Prozesses mittels eines Bedien- und Beobachtungssystems (2), wobei Automatisierungskomponenten (2 ... 12) dem Bedien- und Beobachtungssystem (2) Prozessinformationen (M1, M2, ... Mn) zur Darstellung auf einer Anzeigeeinheit des Bedien- und Beobachtungssystems (2) übermitteln, **gekennzeichnet durch** folgende Schritte:
- Zuordnen einer von einem Anwender vorgebbaren Kennung (K) zu mindestens einer Prozessinformation (M1, M2, ... Mn) mittels einer Eingabeeinheit des Bedien- und Beobachtungssystems (2),
- Auffinden der dieser Kennung (K) zugeordneten mindestens einen Prozessinformation (M3, M4) mittels eines Suchsystems des Bedien- und Beobachtungssystems (2) nach einer Aktivierung des Suchsystems **durch** den Anwender.

2. Verfahren nach Anspruch 1, **dadurch gekennzeichnet, dass** die Kennung (K) als ein menschenlesbarer Begriff auf einer Anzeigeeinheit des Bedien- und Beobachtungssystems (2) dargestellt wird.

3. Bedien- und Beobachtungssystem, welches zur Führung und zum Beobachten eines Prozesses vorgesehen ist, wobei Automatisierungskomponenten (2 ... 12) dem Bedien- und Beobachtungssystem (2) Prozessinformationen (M1, M2, ... Mn) zur Darstellung auf einer Anzeigeeinheit des Bedien- und Beobachtungssystems (2) übermitteln, **dadurch gekennzeichnet, dass** ein Anwender mittels einer Eingabeeinheit des Bedien- und Beobachtungssystems (2) mindestens einer Prozessinformation (M1, M2, ... Mn) eine durch den Anwender vorgebbare Kennung (K) zuordnet, wobei das Bedien- und Beobachtungssystem (2) ein Suchsystem aufweist, welches zum Auffinden der dieser Kennung (K) zugeordneten Prozessinformation (M3, M4) vorgesehen ist.

4. Bedien- und Beobachtungssystem nach Anspruch 3, **dadurch gekennzeichnet, dass** die Kennung (K) ein menschenlesbarer Begriff ist.
